# EUROPÄISCHE PATENTSCHRIFT

(11) **EP 1 162 230 B1**
(45) Veröffentlichungstag und Bekanntmachung des Hinweises auf die Patenterteilung: **21.04.2004**
(21) Anmeldenummer: 01710025.6
(22) Anmeldetag: 10.05.2001
(51) Int. Cl.: C08K 5/15, C08J 9/00

(54) **Zellige Polyisocyanat-Polyadditionsprodukte**
Cellular polyisocyanate-polyaddition products
Produits cellulaires de polyaddition de polyisocyanates

(30) Priorität: 07.06.2000 DE 10027800
(43) Veröffentlichungstag der Anmeldung: 12.12.2001
(73) Patentinhaber: BASF AKTIENGESELLSCHAFT, 67056 Ludwigshafen (DE)
(72) Erfinder: Kreyenschmidt, Martin Dr., 49393 Lohne (DE); Ortalda, Marco, 10137 Torino (IT); Kappes, Anton, 82140 Olching (DE)

(56) Entgegenhaltungen:
- DE-A- 19 928 687
- US-A- 4 757 095

## Beschreibung

Die Erfindung bezieht sich auf zellige Polyisocyanat-Polyadditionsprodukte mit einer Dichte von 250 bis 900 kg/m³ enthaltend Ester, die keine freie gegenüber Isocyanaten reaktive Gruppe aufweisen, basierend auf Carbonsäuren mit mindestens 2 Carboxylgruppen und Alkoholen mit 2 bis 5 Hydroxylgruppen, insbesondere Schuhsohlen, Schuheinbauteile, Dämpfungselemente und/oder Rollen enthaltend derartige zellige Polyurethane sowie Verfahren zu deren Herstellung.

Die Herstellung von Polyisocyanat-Polyadditionsprodukten, beispielsweise.Polyurethanen, die gegebenenfalls Isocyanuratund/oder Harnstoffstrukturen enthalten können, durch Umsetzung von Polyisocyanaten mit gegenüber Isocyanaten reaktiven Verbindungen in Anwesenheit von Katalysatoren, die die Reaktion der gegenüber Isocyanaten reaktiven Stoffe mit Isocyanaten beschleunigen und gegebenenfalls Treibmitteln, Zusatzstoffen, und/oder Hilfsmitteln ist allgemein bekannt.

Wie auch andere Kunststoffe sind Polyisocyanat-Polyadditionsprodukte Alterungsprozessen unterworfen, die im allgemeinen mit zunehmender Zeit zu einer Verschlechterung der Gebrauchseigenschaften führen. Wesentliche Alterungseinflüsse sind beispielsweise Hydrolyse, Photooxidation und Thermooxidation, die zu Bindungsbrüchen in den Polymerketten führen. Bei Polyisocyanat-Polyadditionsprodukten, beispielsweise Polyurethanen, im Folgenden auch als PUR bezeichnet, hat speziell die Einwirkung von Feuchtigkeit und noch verstärkt die Kombination von Feuchtigkeit und erhöhter Temperatur eine hydrolytische Spaltung der Urethan- und Harnstoffbindungen zur Folge.

Diese Spaltung äußert sich nicht nur in einer signifikanten Verschlechterung der Gebrauchseigenschaften, beispielsweise dem Dauerbiegeverhalten bei Schuhsohlen, sondern führt auch zur Bildung von primären aromatischen Aminen wie z.B. Toluylendiamin (TDA) und Diaminodiphenylmethan (MDA) oder primären aliphatischen Aminen wie beispielsweise Hexamethylendiamin oder Isophorondiamin.

Wie in Versuchen festgestellt wurde, wird die Urethanspaltung von einer Reihe von Parametern beeinflußt. Insbesondere hohe Temperaturen ab 80°C in Kombination mit hoher Luftfeuchtigkeit führen zur hydrolytischen Spaltung der Urethan- und Harnstoffbindungen. Derartige Bedingungen sind für einige spezielle Anwendungsgebiete von zelligen Polyurethanen von Bedeutung.

Ein weiterer Parameter, der die Urethanspaltung signifikant beeinflußt, ist die Art und Menge der verwendeten Katalysatoren. Wie in diversen Experimenten nachgewiesen werden konnte, katalysieren die in Polyurethansystemen enthaltenen, für die Urethanisierungs- und Treibreaktion notwendigen Katalysatoren, in erheblichem Maße auch die hydrolytische Rückspaltungsreaktion. Die Anwesenheit von Katalysatoren ist somit eine ganz entscheidende Voraussetzung für die Hydrolyse der Urethan- und Harnstoffbindungen. Darüber hinaus konnte gezeigt werden, daß die Effizienz der Hydrolyse in hohem Maße von der Aktivität und der Art des Katalysators abhängig ist, sowie der Tatsache, ob der Katalysator im System verbleibt oder aus dem Material herausmigrieren kann: Insbesondere tertiäre Aminkatalysatoren mit reaktionsfähigen funktionellen Gruppen wie OH- und NH₂ beschleunigen die Aminbildung durch Absenkung der Aktivierungsenergie für die Spaltreaktion erheblich. Die funktionellen Gruppen bewirken den Einbau der Katalysatoren in das entstehende PUR-Netzwerk und die damit hergestellten Produkte weisen den Vorteil geringerer Geruchs- und Foggingproblematik auf, da die Katalysatoren nach der Fertigstellung des PUR-Produktes nicht durch Diffusion entweichen können. Dasselbe gilt für Rezepturen mit Polyolen, die mit primären oder sekundären Aminen als Startmoleküle hergestellt wurden und somit katalytisch aktive Zentren besitzen. Derartige Polyole kommen in jüngster Zeit vermehrt zum Einsatz. Bei Rezepturen mit solchen Bestandteilen, die als Spezialanwendungen besonderen feucht-warmen Bedingungen ausgesetzt sind, kann die Bildung von primären Aminen als Spaltprodukte nicht ausgeschlossen werden. Bei Schaumstoffen mit Aminkatalysatoren, die keine einbaufähigen funktionellen Gruppen enthalten, entweichen diese dagegen in der Regel bereits kurze Zeit nach der Fertigstellung, bzw. bei der Alterung des Schaumstoffes. Bei solchen Schaumstoffen führen feucht-warme Bedingungen zu wesentlich geringeren Amingehalten.

Um speziell bei solchen PUR-Produkten, die feucht-warmen Bedingungen ausgesetzt sind, die hydrolytische Spaltung von Urethan- und Harnstoffbindungen und damit die Bildung primärer Amine sowie die Verschlechterung der mechanischen Eigenschaften zu vermindern, war es notwendig, Additive zu finden, die die verwendeten Aminkatalysatoren durch Deaktivierung in ihrer Effizienz zur Bindungsspaltung behindern. Die Additive sollten dabei die Schäumreaktion nicht wesentlich beeinflussen.

In der WO96/23826 wird die Darstellung von steifen thermoplastischen Polyurethanen mit verbesserter "melt strength" durch Zugabe eines deaktivierbaren Metall-Katalysators und der Zugabe eines Deaktivators für den deaktivierbaren Metall-Katalysator, um die Spaltung von Urethanbindungen zu unterdrücken, beschrieben. Eine Verbesserung der Hydrolysestabilität und damit der Alterung wird nicht beschrieben. Bei den genannten Katalysatoren handelt es sich um Zinnverbindungen, die über Deaktivatoren wie Säuren, speziell auf Phosphorbasis, antioxidante Metall-Deaktivatoren wie gehinderte phenolische Polyamine, phenolische Hydrazine oder phenolische Oxime deaktiviert werden. Über eine Deaktivierung von tertiären Aminkatalysatoren wird in diesem Dokument nicht berichtet. Der Deaktivator wird bevorzugt in gekapselter Form eingesetzt und muß in einem aufwendigen technischen Verfahren hergestellt werden. Wünschenswert wäre der einfache Zusatz von Additiven in die Isocyanat- oder Polyolkomponente.

DE-A 42 32 420 offenbart die Verwendung von α,β-ungesättigten Estercarboxylaten zur Herstellung von Polyurethanschaumstoffen, die eine verbesserte Stauchhärte und Reißdehnung aufweisen. Salze von α,β-ungesättigten Estercarboxylaten werden hierin als Katalysatoren für die NCO/Wasser-Reaktion verwendet. In einem Nebensatz wird beschrieben, daß die Verbindungen aufgrund des Vorliegens von olefinischen Doppelbindungen in Nachbarschaft zu den Carboxylatgruppen zur Addition von Aminogruppen, die während der langsamen Schaumalterung entstehen, befähigt sind. Nachteilig an diesen Verbindungen ist ihre katalytische Wirkung, die zu einer Beeinträchtigung der Schäumreaktion führt. Die katalytische Wirkung von Additiven zur Reduzierung der Amingehalte in fertigen PUR-Schäumen ist jedoch nicht erwünscht, da dies wie oben beschrieben zu einer weiteren und beschleunigten Bildung primärer Amine führt.

DE-A 197 10 978 beschreibt Lactone in Kombination mit carbodiimidhaltigen Verbindungen als Stabilisatoren gegen hydrolytische Alterungserscheinungen in halbharten kompakten und/oder zelligen Polyurethanformteilen. Der Zusatz der Wirkstoffkombinationen aus Carbodiimid und Lacton führt zu einem wesentlich geringeren Abfall der Zugfestigkeit der Produkte nach Feucht-Wärmelagerung, verglichen zu einem Produkt ohne Zusatz dieser Kombination. Nachteilig an diesen Zusätzen ist, daß die Lactone nur dann als Hydrolyseschutzmittel wirken, wenn sie in Kombination mit Carbodiimiden, die schon lange als Hydrolyseschutzmittel für Polyesterurethane beschrieben wurden, eingesetzt werden. Zusätzlich wird ihre Wirksamkeit lediglich in halbharten Polyurethanen beschrieben.

In GB 2193504 und US 4757095 werden niedermolekulare Lactone und Lactame mit einer Ester- bzw. Amidstruktur im Molekül als Zusätze für Prepolymere, die zur Herstellung von mikrozellulären Polyurethanschaumstoffen für Schuhsohlen verwendet werden, offenbart. Die Lactone und Lactame bewirken eine verbesserte Kälteflexibilität der resultierenden Elastomere, indem sie zu einer Gefrierpunktserniedrigung der Prepolymere auf 0°C führen. Auf eine Verbesserung der Langzeitstabilität, bzw. des Hydrolyseschutzes der Polyurethanelastomere wird in diesem Patent nicht eingegangen. Dasselbe gilt für die US 4234445 und US 4195148, in denen Lactone als nichtflüchtige Zusätze zur Verringerung der Viskosität von Polyurethan-Prepolymeren zur Herstellung von gesprühten Polyurethanen beschrieben werden. Zum selben Zweck werden Caprolacton sowie cyclische Carbonate in EP-A 276 452 zur Herstellung von Hartschaumstoffen verwendet. Neben der verbesserten Verarbeitbarkeit des Prepolymers weisen die daraus hergestellten Polyurethanschaumstoffe eine Reihe weiterer Vorteile wie z.B. verbesserte Dimensionstabilität und erhöhter Flammschutz auf. Allerdings beschränkt sich die Wirksamkeit auf Prepolymere aus aromatischen Polyesterpolyolen. Auch in diesem Patent wird nicht auf eine verbesserte Hydrolysestabilität oder gar der Verminderung des Gehaltes an Aminen eingegangen.

In der WO 89/05830 werden u.a. Lactone als Baustein zur Synthese von Polyesterpolyolen, die in Prepolymeren für biologisch abbaubare, kompakte Polyurethane eingesetzt werden, beschrieben.

Aufgabe der vorliegenden Erfindung war es, aminische Katalysatoren in zelligen Polyisocyanat-Polyadditionsprodukten, insbesondere nach der Herstellung der zelligen Polyisocyanat-Polyadditionsprodukte zu deaktivieren und damit die Spaltung von Urethanbindungen in Polyisocyanat-Polyadditionsprodukten zu verhindern. Die Additive sollten dabei die Schäumreaktion bei der Herstellung der zelligen Polyisocyanat-Polyadditionsprodukte nicht negativ beeinflussen. Die Gebrauchseigenschaften der zelligen Polyisocyanat-Polyadditionsprodukte, insbesondere das Dauerbiegeverhalten von Schuhsohlen, sollten ebenfalls verbessert werden.

Diese Aufgabe konnte durch die eingangs dargestellten zelligen Polyisocyanat-Polyadditionsprodukte, bevorzugt zelligen Polyurethanen, mit einer Dichte von 250 bis 900 kg/m³ enthaltend Ester, die keine freie gegenüber Isocyanaten reaktive Gruppe aufweisen, die Ester werden im Folgenden auch als "Inhibitoren" bezeichnet, basierend auf Carbonsäuren mit mindestens 2, bevorzugt 2 bis 5, besonders bevorzugt 2 Carboxylgruppen und Alkoholen mit 2 bis 5, bevorzugt 2 Hydroxylgruppen gelöst werden.

Als freie gegenüber Isocyanaten reaktive Gruppen sind insbesondere Hydroxylgruppen, freie Carbonsäuren oder Carboxylate, Thiolgruppen, primäre und/oder sekundäre Amine zu verstehen.

Die erfindungsgemäßen Inhibitoren werden bevorzugt in allgemein bekannten Verfahren zur Herstellung der Polyisocyanat-Polyadditionsprodukte, bevorzugt Polyurethane, die gegebenenfalls Isocyanurat und/oder Harnstoffstrukturen aufweisen können, besonders bevorzugt Polyurethanweichschaumstoffe, eingesetzt. Erfindungsgegenstand sind demnach auch Verfahren zur Herstellung von zelligen Polyisocyanat-Polyadditionsprodukten mit einer Dichte von 250 bis 900 kg/m³, wobei man die Herstellung in Gegenwart der erfindungsgemäßen Inhibitoren durchführt.

Die erfindungsgemäßen Produkte, insbesondere Schuhsohlen, Schuheinbauteile, Dämpfungselemente und/oder Rollen, weisen nicht nur eine deutlich erhöhte Stabilität gegenüber einer hydrolytischen Spaltung der Urethanbindung auf, sondern verfügen auch über ein verbessertes Dauerbiegeverhalten. Geprüft wird das Dauerbiegeverhalten, indem in einem entsprechenden Polyurethanformkörper, beispielsweise einer Schuhsohle, ein 2 mm breiter Einstich geschnitten und anschließend das Material einem Biegetest unterworfen wird. Dazu wird das Material bei 100000 Biegungen von 90° und einer Frequenz von 150 Biegungen pro Minute eine maximale Rißerweiterung von 4 mm erfahren darf, um den Test noch zu bestehen.

Erfindungsgemäß werden die Inhibitoren somit zur Verbesserung des Dauerbiegeverhaltens und der Hydrolysebeständigkeit von zelligen Polyurethanen mit einer Dichte von 250 bis 900 kg/m³ verwendet.

Die erfindungsgemäßen Inhibitoren reagieren während des Schäumprozesses nicht mit den weiteren Ausgangskomponenten und werden erst anschließend durch Hydrolyse in die entsprechenden Carbonsäuren überführt. Die durch Hydrolyse der Inhibitoren entstehenden Carbonsäuren sind zur Protonierung des tertiären N-Atoms im Aminkatalysator befähigt. Durch die Blockierung des katalytisch aktiven N-Atoms unter Ausbildung eines quartären N-Atoms verliert der Aminkatalysator seine katalytische Aktivität bezüglich der hydrolytischen Rückspaltung von Urethan- und Harnstoffbindungen. Dadurch wird einer Verschlechterung der mechanischen Eigenschaften der Polyisocyanat-Polyadditionsprodukte, insbesondere unter feucht-warmer Belastung, entgegengewirkt. Durch den Zusatz der Inhibitoren wird die Hydrolyse von Urethan- und Harnstoffbindungen auf zweierlei Weise vermindert, wie erwähnt durch die Deaktivierung der vorhandenen Aminkatalysatoren aber auch dadurch, daß ein Großteil des eindringenden Wassers bereits für die Hydrolyse der zugesetzten Esterstrukturen der Inhibitoren verbraucht wird und für die Spaltung von Urethan- und Harnstoffbindungen nicht mehr zur Verfügung steht. Zum anderen sind die Inhibitoren jedoch auch zur Reaktion mit bereits gebildetem primären Amin zu Hydroxy- bzw. Aminocarbonsäureamiden befähigt. Insbesondere in Polyurethanen auf der Basis von Polyesterpolyolen würde man erwarten, daß diese aus den Inhibitoren generierten Säuren zur autokatalytischen Zersetzung der Polyesterbindung im Polyurethanpolymerweichphase beitragen. Es war desto überraschender, daß dieser Effekt nicht festgestellt werden konnte und somit auch in Polyurethanen auf der Basis von Polyesterpolyolen mit den Inhibitoren eine verbesserte Hydrolysestabilität erreicht werden konnte.

Als erfindungsgemäße Inhibitoren können beispielsweise die folgenden Verbindungen eingesetzt werden:

Lineare oder bevorzugt cyclische Ester, bevorzugt mit einem Molekulargewicht von 150 bis 800 g/mol, bevorzugt Kondensationsprodukte von aliphatischen, cycloaliphatischen, araliphatischen und/oder aromatischen Dicarbonsäuren mit 2 bis 15, bevorzugt 4 bis 8 Kohlenstoffatomen und aliphatischen, cycloaliphatischen, araliphatischen und/oder aromatischen Dialkoholen mit 2 bis 15 Kohlenstoffatomen, besonders bevorzugt Kondensationsprodukte basierend auf Diethylenglykol (DEG), Ethylenglykol und/oder Butandiol und Dicarbonsäure mit 2 bis 8 Kohlenstoffatomen, insbesondere Adipinsäure (ADS). Diese derartigen cyclischen Ester, wie z.B. der cyclische DEG-ADS-Ester und der cyclische ADS-DEG-ADS-DEG-Ester, befinden sich neben DEG und niedermolekularen linearen Estern zu ca. 40 bis 50 Massen-% in einem Destillationsrückstand, der bei der Synthese von Polyesterpolyolen auf Basis von ADS-DEG-Trimethylolpropan anfällt und sind demnach wirtschaftlich besonders günstig einzusetzen. Im Falle der linearen Ester werden endständige Carboxylgruppen mit Monoalkoholen mit 2 bis 10 Kohlenstoffatomen umgesetzt bzw. endständige Hydroxylgruppen mit Monocarbonsäuren mit 2 bis 8 Kohlenstoffatomen umgesetzt. Die erfindungsgemäßen Inhibitoren weisen somit grundsätzlich keine freien Hydroxylgruppen und/oder freie Carbonsäureund/oder Carboxylatgruppen auf.

Die erfindungsgemäßen Inhibitoren werden zur Herstellung von zelligen, bevorzugt mikrozelligen Polyisocyanat-Polyadditionsprodukten, besonders bevorzugt Schuhsohlen, Schuheinbauteile oder Dämpfungselemente nach allgemein bekannten Verfahren beispielsweise durch Umsetzung von Isocyanaten mit gegenüber Isocyanaten reaktiven Verbindungen in Gegenwart von Katalysatoren, Treibmitteln und gegebenenfalls Zusatzstoffen und/oder Hilfsmitteln verwendet.

Zur Herstellung der zelligen Polyisocyanat-Polyadditionsprodukte setzt man die Inhibitoren bevorzugt in einer Menge von 0,01 bis 20,0 Gew.-%, bezogen auf das Gewicht der gegenüber Isocyanaten reaktiven Verbindungen ein.

Die weiteren Ausgangsstoffe für die Herstellung der Polyisocyanat-Polyadditionsprodukte werden nachfolgend beispielhaft beschrieben.

Als Isocyanate können die an sich bekannten aliphatischen, cycloaliphatischen, araliphatischen und vorzugsweise aromatischen organischen, gegebenenfalls nach bekannten Verfahren modifizierten Isocyanate, bevorzugt mehrfunktionelle, besonders bevorzugt Diisocyanate, eingesetzt werden.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylen-diisocyanat-1,4, 2-Methylpentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, aromatische Diund Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanaten, Polyphenylpolymethylen-polyisocyanate, Mischungen aus 4,4'-, 2,4'- und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Bevorzugt werden als Isocyanate in den erfindungsgemäßen Verfahren 4,4'-, 2,4'- und/oder 2,2'-Diphenylmethandiisocyanat, 2,4-und/oder 2,6-Toluylendiisocyanat, NDI, Hexamethylendiisocyanat und/oder Isophorondiisocyanat eingesetzt, wobei diese Isocyanate sowohl in beliebigen Mischungen als auch modifiziert eingesetzt werden können.

Als gegenüber Isocyanaten reaktive Verbindungen mit üblicherweise mindestens zwei reaktiven Wasserstoffatomen, üblicherweise Hydroxyl- und/oder Aminogruppen, werden zweckmäßigerweise solche mit einer Funktionalität von 2 bis 8, vorzugsweise 2 bis 6, und einem Molekulargewicht von üblicherweise 60 bis 10000, verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole, die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 500 bis 8000.

Als Polyether-polyole eignen sich beispielsweise auch polymermodifizierte Polyether-polyole, vorzugsweise Pfropf-polyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril hergestellt werden können.

Die Polyether-polyole können ebenso wie die Polyester-polyole einzeln oder in Form von Mischungen verwendet werden. Ferner können sie mit den Pfropf-polyether-polyolen oder Polyester-polyolen sowie hydroxylgruppenhaltigen Polyesteramiden, Polyacetalen und/oder Polycarbonaten gemischt werden.

Als gegenüber Isocyanaten reaktive Verbindungen können des weiteren Kettenverlängerungs- und/oder Vernetzungsmittel verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Wasser, Diole und/oder Triole mit Molekulargewichten von 60 bis <500, vorzugsweise von 60 bis 300 verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz, wobei thermoplastische Polyurethane bevorzugt ohne Vernetzungsmittel hergestellt werden.

Als Katalysatoren kommen allgemein übliche Verbindungen in Betracht, beispielsweise organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)imidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Bevorzugt können tertiäre aliphatische und/oder cycloaliphatische Amine in den Mischungen enthalten sein, besonders bevorzugt Triethylendiamin.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser in üblichen Mengen eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Üblicherweise werden die organischen Polyisocyanate und die gegenüber Isocyanaten reaktiven Verbindungen mit einem Molekulargewicht von 60 bis 10000 g/mol in solchen Mengen zur Umsetzung gebracht, daß das Äquivalenzverhältnis von NCO-Gruppen der Polyisocyanate zur Summe der reaktiven Wasserstoffatome der gegenüber Isocyanaten reaktiven Verbindungen 0,5 bis 5 : 1 vorzugsweise 0,9 bis 3 : 1 und insbesondere 0,95 bis 2 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren, oder dem bekannten Prepolymer-Verfahren hergestellt werden, beispielsweise mit Hilfe der Hochdruck- oder Niederdruck-Technik in offenen oder geschlossenen Formwerkzeugen, Reaktionsextrudern oder Bandanlagen. Die Polyurethanweichschaumstoffe werden bevorzugt nach dem one-shot-Verfahren hergestellt.

Als vorteilhaft hat es sich erwiesen, die Polyisocyanat-Polyadditionsprodukte nach dem Zweikomponentenverfahren herzustellen und die gegenüber Isocyanaten reaktiven Verbindungen und gegebenenfalls die Katalysatoren, Treibmittel und/oder Hilfsund/oder Zusatzstoffe in der A-Komponente zu vereinigen und als B-Komponente die Isocyanate und Katalysatoren und/oder Treibmittel einzusetzen. Die Inhibitoren können in der A- und/oder B-Komponente beziehungsweise in den Bestandteilen dieser Komponenten verwendet werden, bevorzugt in der B-Komponente oder Bestandteilen der B-Komponente.

## Patentansprüche

1. Zellige Polyisocyanat-Polyadditionsprodukte mit einer Dichte von 250 bis 900 kg/m³ enthaltend Ester, die keine freie gegenüber Isocyanaten reaktive Gruppe aufweisen, basierend auf Carbonsäuren mit mindestens 2 Carboxylgruppen und Alkoholen mit 2 bis 5 Hydroxylgruppen.

2. Zellige Polyisocyanat-Polyadditionsprodukte gemäß Anspruch 1 enthaltend Ester, die keine freie gegenüber Isocyanaten reaktive Gruppe aufweisen, mit einem Molekulargewicht von 150 bis 800 basierend auf Dicarbonsäuren mit 2 bis 8 Kohlenstoffatomen und Diethylenglykol, Ethylenglykol und/oder Butandiol.

3. Schuhsohlen, Schuheinbauteile, Dämpfungselemente und/oder Rollen enthaltend zellige Polyurethane gemäß Anspruch 1.

4. Verfahren zur Herstellung von zelligen Polyisocyanat-Polyadditionsprodukten mit einer Dichte von 250 bis 900 kg/m³, **dadurch gekennzeichnet, daß** die Herstellung in Gegenwart von Estern, die keine freie gegenüber Isocyanaten reaktive Gruppe aufweisen, basierend auf Carbonsäuren mit mindestens 2 Carboxylgruppen und Alkoholen mit 2 bis 5 Hydroxylgruppen durchführt wird.

5. Verwendung von Estern, die keine freie gegenüber Isocyanaten reaktive Gruppe aufweisen, basierend auf Carbonsäuren mit mindestens 2 Carboxylgruppen und Alkoholen mit 2 bis 5 Hydroxylgruppen zur Verbesserung des Dauerbiegeverhaltens und der Hydrolysebeständigkeit von zelligen Polyurethanen mit einer Dichte von 250 bis 900 kg/m³.

## Claims

1. A cellular polyisocyanate polyadduct having a density of from 250 to 900 kg/m³, comprising esters which have no free group reactive toward isocyanates, based on carboxylic acids having at least 2 carboxyl groups and alcohols having 2 to 5 hydroxyl groups.

2. A cellular polyisocyanate polyadduct as claimed in claim 1, comprising esters which have no free group reactive toward isocyanates, having a molecular weight of from 150 to 800, based on dicarboxylic acids having 2 to 8 carbon atoms and diethylene glycol, ethylene glycol and/or butandiol.

3. A shoe sole, shoe insert, damping element and/or roller comprising a cellular polyurethane as claimed in claim 1.

4. A process for the preparation of cellular polyisocyanate polyadducts having a density of from 250 to 900 kg/m³, wherein the preparation is carried out in the presence of esters which have no free group reactive toward isocyanates, based on carboxylic acids having at least 2 carboxyl groups and alcohols having 2 to 5 hydroxyl groups.

5. The use of esters which have no free group reactive toward isocyanates, based on carboxylic acids having at least 2 carboxyl groups and alcohols having 2 to 5 hydroxyl groups, for improving the flexing endurance and the stability to hydrolysis of cellular polyurethanes having a density of from 250 to 900 kg/m³.

## Revendications

1. Produits cellulaires de polyaddition de polyisocyanate, présentant une densité de 250 à 900 kg/m³, contenant des esters qui ne présentent pas de groupes libres réactifs par rapport aux isocyanates, basés sur des acides carboxyliques comprenant au moins 2 groupes carboxyle et des alcools comprenant 2 à 5 groupes hydroxyle.

2. Produits cellulaires de polyaddition de polyisocyanate selon la revendication 1, contenant des esters qui ne présentent pas de groupes libres réactifs par rapport aux isocyanates, présentant un poids moléculaire de 150 à 800 basés sur des acides dicarboxyliques comprenant 2 à 8 atomes de carbone et le diéthylèneglycol, l'éthylèneglycol et/ou le butanediol.

3. Semelles de chaussures, éléments de chaussures, éléments d'amortissement et/ou rouleaux contenant des polyuréthannes cellulaires selon la revendication 1.

4. Procédé pour la préparation de produits cellulaires de polyaddition de polyisocyanate présentant une densité de 250 à 900 kg/m³, **caractérisé en ce que** la préparation est réalisée en présence d'esters qui ne présentent pas de groupes libres réactifs par rapport aux isocyanates, basés sur des acides carboxyliques comprenant au moins 2 groupes carboxyle et des alcools comprenant 2 à 5 groupes hydroxyle.

5. Utilisation d'esters qui ne présentent pas de groupes libres réactifs par rapport aux isocyanates, basés sur des acides carboxyliques comprenant au moins 2 groupes carboxyle et des alcools comprenant 2 à 5 groupes hydroxyle pour améliorer le comportement à la flexion à long terme et la résistance à l'hydrolyse de polyuréthannes cellulaires présentant une densité de 250 à 900 kg/m³.
